Europäisches Patentamt

European Patent Office

Office européen des brevets

(19)

(11) **EP 1 023 935 B1**

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(51) Int Cl.⁷: **B01D 53/94**, B01D 53/32, F01N 3/10

(21) Anmeldenummer: **00101564.3**

(22) Anmeldetag: **27.01.2000**

(54) **Verfahren zur selektiven katalytischen Reduktion von Stickoxiden in sauerstoffhaltigen Abgasen**

Process for selective catalytic reduction of nitrogen oxides in oxygen-containing exhaust gases

Procédé pour la reduction catalytique sélective des oxydes d'azote dans des gaz d'échappement contenant de l'oxygène

(84) Benannte Vertragsstaaten:
**DE FR GB**

(30) Priorität: **29.01.1999 DE 19903533**

(43) Veröffentlichungstag der Anmeldung:
**02.08.2000 Patentblatt 2000/31**

(73) Patentinhaber: **Umicore AG & Co. KG**
**63457 Hanau-Wolfgang (DE)**

(72) Erfinder:
• **Gieshoff, Jürgen, Dr.**
**63599 Biebergemünd (DE)**
• **van den Tillaart, Hans, Dr.**
**63579 Freigericht (DE)**
• **Kreuzer, Thomas, Dr.**
**61184 Karben (DE)**
• **Lox, Egbert, Dr.**
**63457 Hanau (DE)**

• **Lang, Jürgen, Dr.**
**73230 Kirchheim-Teck (DE)**

(74) Vertreter: **Herrmann, Reinhard**
**OMG AG**
**FI-PAT**
**Postfach 1351**
**63403 Hanau (DE)**

(56) Entgegenhaltungen:
EP-A- 0 376 025     EP-A- 0 385 164
EP-A- 0 814 241     EP-A- 0 861 972
DE-A- 19 510 804     US-A- 5 711 147

• ODA T ET AL: "Nitric oxide decomposition in air by using non-thermal plasma processing - with additives and catalyst" JOURNAL OF ELECTROSTATICS,NL,ELSEVIER SCIENCE PUBLISHERS B.V. AMSTERDAM, Bd. 42, Nr. 1-2, 1. Oktober 1997 (1997-10-01), Seiten 151-157, XP004096576 ISSN: 0304-3886

**Beschreibung**

Die Erfindung betrifft ein Verfahren zur selektiven katalytischen Reduktion der in einem mageren Abgas von Verbrennungsmotoren enthaltenen Stickoxide durch Reduktion der Stickoxide mittels Ammoniak an einem Katalysator.

Bei den Verbrennungsmotoren mit magerem Abgas handelt es sich um Dieselmotoren und mager betriebene Benzinmotoren, sogenannte Magermotoren. Gegenüber stöchiometrisch betriebenen konventionellen Motoren zeichnen sich Dieselmotoren und Magermotoren durch einen um bis zu 20% geringeren Kraftstoffverbrauch aus. Ein wesentliches Problem dieser Motoren stellt die Reinigung ihrer Abgase dar. Wegen des hohen Sauerstoffgehaltes im Abgas von bis zu 15 Vol.-% lassen sich zwar die oxidierbaren Schadstoffkomponenten des Abgases (Kohlenwasserstoffe HC, Kohlenmonoxid CO und in geringen Mengen Wasserstoff $H_2$) leicht an einem Katalysator zu Kohlendioxid und Wasser umsetzen, die bei der Verbrennung des Kraftstoffs jedoch ebenfalls entstehenden Stickoxide $NO_x$ können aber wegen der bevorzugt ablaufenden Oxidationsreaktionen nicht im ausreichenden Maße zu Stickstoff $N_2$ reduziert werden.

Zur Lösung dieses Problems wurde das schon bei stationären Verbrennungsanlagen bekannte Verfahren der selektiven katalytischen Reduktion SCR (Selective Catalytic Reduction) vorgeschlagen. Hierbei wird dem mageren Abgas ein Reduktionsmittel zugeführt, mit dessen Hilfe die Stickoxide an einem hierfür geeigneten Katalysator selektiv reduziert werden können. Bevorzugt wird als Reduktionsmittel Ammoniak verwendet, welches mit hoher Selektivität mit den Stickoxiden zu Stickstoff und Wasser reagiert. Das Verhältnis von eingebrachtem Ammoniak zu den vorhandenen Stickoxiden ist etwa 1:1. Ammoniak kann dabei direkt aus Harnstoff mit Hilfe eines Hydrolysekatalysators oder durch Zersetzung eines entsprechenden Salzes (z.B. Carbamate) erzeugt werden.

Zur Zeit werden große Anstrengungen unternommen, solche Systeme in Lastkraftwagen einzusetzen. Nachteilig bei diesem Verfahren ist, daß ein weiterer Betriebsstoff mitgeführt werden muß. Der mit der SCR-Technologie verbundene hohe Aufwand hat bisher ihren breiten Einsatz insbesondere bei Personenkraftwagen verhindert. Alternativ zu Ammoniak können als Reduktionsmittel auch Alkohole, Wasserstoff oder Kohlenwasserstoffe eingesetzt werden. Diese Reduktionsmittel weisen jedoch deutlich schlechtere Selektivitäten für die Stickoxidreduktion im mageren Abgas als Ammoniak auf. So zeigt sich über gesetzlich vorgeschriebene Fahrzyklen mit den alternativen Reduktionsmitteln ein stickoxidumsatz von bis zu 30%, während mit Ammoniak Umsätze bis über 70% möglich sind.

Die selektive katalytische Reduktion mit Ammoniak zeigt also sehr gute Ergebnisse, ist jedoch mit einem erheblichen apparativen Aufwand verbunden, der den Einsatz an kleineren Motoren bisher verhindert hat.

Die europäischen Offenlegungsschriften EP 0 814 241 A1 und EP 0 861 972 A1 offenbaren ein Verfahren zur selektiven katalytischen Reduktion der in einem mageren Abgas einer Verbrennungskraftmaschine mit mehreren Zylindern enthaltenen Stickoxide durch Reduktion der Stickoxide mittels Ammoniak. Die Verbrennungskraftmaschine enthält zwei Gruppen von Zylindern. Die erste Gruppe von Zylindern wird mit einem fetten Luft/Kraftstoff-Gemisch betrieben. Das fette Abgas dieser Zylinder wird zur Bildung von Ammoniak aus den im Abgas enthaltenen Stickoxiden über einen Dreiweg-Katalysator geleitet. Die zweite Gruppe von Zylindern wird mit einem mageren Luft/Kraftstoff-Gemisch betrieben. Das magere Abgas dieser Zylinder wird zur selektiven katalytischen Reduktion der in ihm enthaltenen Stickoxide mit dem Abgas der ersten Gruppe von Zylindern zusammengeführt und über einen Reduktions-Katalysator für die selektive katalytische Reduktion geleitet.

Es ist Aufgabe der vorliegenden Erfindung, ein Verfahren zur selektiven katalytischen Reduktion mit Ammoniak anzugeben, welches sich durch eine einfache Erzeugung des für die Reduktion benötigten Ammoniaks auszeichnet.

Diese Aufgabe wird gelöst durch ein Verfahren zur selektiven katalytischen Reduktion der in einem mageren Abgas von Verbrennungskraftmaschinen mit einem oder mehreren Zylindern enthaltenen Stickoxide durch Reduktion der Stickoxide mittels Ammoniak an einem Reduktions-Katalysator. Das Verfahren ist gekennzeichnet durch die Verfahrensschritte:

a) Erzeugung eines fetten Gasstromes mit einer Luftzahl kleiner als 1,
b) Bilden von Ammoniak im fetten Gasstrom durch Reaktion seiner Komponenten untereinander,
c) Zusammenführen des mageren Abgases mit dem fetten Gasstrom und
d) Reduktion der im mageren Abgas enthaltenen Stickoxide am Reduktions-Katalysator unter Verwendung des gebildeten Ammoniaks als Reduktionsmittel.

Die Luftzahl ($\lambda$) beschreibt die Zusammensetzung des Gasstromes. Es handelt sich dabei um das auf stöchiometrische Bedingungen normierte Luft/Kraftstoff-Verhältnis. Stöchiometrische Bedingungen liegen bei einer Luftzahl von 1 vor. Bei einer Luftzahl über 1 enthält das Gas mehr Sauerstoff als für eine vollständige Verbrennung der brennbaren Bestandteile benötigt wird. Eine solche Gaszusammensetzung wird als mager bezeichnet. Eine fette Gaszusammensetzung liegt vor, wenn der Sauerstoffgehalt geringer ist als für eine vollständige Verbrennung aller brennbaren Bestandteile des Gases benötigt wird.

Wesentlich für das erfindungsgemäße Verfahren ist die Erzeugung des für die katalytische Reduktion benötigten Ammoniaks aus einem fetten Gasstrom durch Reaktion seiner Komponenten untereinander. Ein solcher Gasstrom kann zum Beispiel durch einen Brenner erzeugt werden, der mit einem unterstöchiometrischen Luft/Kraftstoff-Gemisch ($\lambda$ < 1) betrieben wird. Der fette Gasstrom kann auch als ein Teil des Abgases der Verbrennungsmaschine gewonnen werden, indem ein Zylinder der Maschine mit einem unterstöchiometrischen Luft/Kraftstoff-Gemisch betrieben wird. Weiterhin besteht die Möglichkeit, den fetten Gasstrom durch Einspritzen von Kohlenwasserstoffen in einen Luftstrom zu bilden.

Ein fettes Abgas enthält zum Beispiel neben unverbrannten Kohlenwasserstoffen noch Kohlenmonoxid, Stickstoffmonoxid und Wasserdampf. Aus den letzteren drei Stoffen läßt sich Ammoniak nach folgender Reaktionsgleichung bilden:

$$5CO + 2NO + 3H_2O \rightarrow 5CO_2 + 2NH_3 \qquad (1)$$

Stickstoffmonoxid wird also mittels Kohlenmonoxid zu Ammoniak reduziert. Die Bildung von Ammoniak ist nicht auf eine Reaktionsführung gemäß der oben angegebenen Bruttoreaktionsgleichung beschränkt. Ebenso kann zum Beispiel Wasserstoff mit stickstoffhaltigen Gaskomponenten beziehungsweise mit Stickstoff zu Ammoniak umgesetzt werden.

Eine nicht erfindungsgemäße Möglichkeit, diese Reduktion vorzunehmen besteht darin, die obige Reaktion allein durch thermische Aktivierung in Gang zu setzen, das heißt durch Aufheizen des fetten Abgases. Allerdings nimmt mit zunehmender Temperatur auch die Rückreaktion zu. Günstiger sind deshalb Reaktionswege, bei denen das Abgas nicht thermisch aufgeheizt werden muß. Ein weiteres nicht erfindungsgemäßes Beispiel hierfür ist die Durchführung der Reaktion an einem geeigneten Katalysator. Die katalytische Reaktion benötigt in der Regel geringere Temperaturen, wodurch der Einfluß der Rückreaktion vermindert werden kann.

Für das erfindungsgemäße Verfahren ist dagegen vorgesehen, Ammoniak durch Leiten des fetten Gasstromes durch ein elektrisches Gasentladungsplasma zu bilden. Die Bildung von Ammoniak in einer elektrischen Gasentladung ist thermodynamisch begünstigt, da sie bei noch wesentlich niedrigeren Temperaturen als die katalytische Reduktion abläuft.

Die Erfindung wird im folgenden an Hand der Figuren 1 bis 9 näher erläutert. Es zeigen:

**Figur 1:** Bildung von Ammoniak und Stickstoffmonoxid durch thermische Spaltung von Cetan ($C_8H_{18}$).

**Figur 2:** Dielektrische Barrieren-Entladung mit parallelen, flächigen Elektroden; einseitig dielektrisch behinderte Entladung

**Figur 3:** Dielektrische Barrieren-Entladung mit parallelen, flächigen Elektroden; beidseitig dielektrisch behinderte Entladung

**Figur 4:** Dielektrische Barrieren-Entladung mit parallelen, flächigen Elektroden; beidseitig dielektrisch behindert; mit Pellets gefüllter Entladungsraum

**Figur 5:** Verbrennungskraftmaschine mit zusätzlichem, unterstöchiometrischen Brenner zur Erzeugung eines fetten Abgas-Teilstroms

**Figur 6:** Verbrennungskraftmaschine mit getrennter Ansteuerung der Zylinder zur Erzeugung eines fetten Abgas-Teilstroms

**Figur 7:** Koaxialer Reaktor mit Palladium-Pelletkatalysator

**Figur 8:** Reaktor mit wabenförmigem Aufbau

**Figur 9:** $NO_x$-Konzentration im emittierten Abgas in Abhängigkeit von der elektrischen Leistung der Gasentladung und der Luftzahl des Abgases

**Figur 10:** Absorptionsbanden von Stickstoffmonoxid in der mageren Synthesegasmischung nach Durchströmen des Plasmareaktors bei abgeschalteter Gasentladung

**Figur 11:** Absorptionsspektrum der Synthesegasmischung nach Durchlaufen des Plasmareaktors zum Zeitpunkt des Umschaltens von magerer auf fette Gaszusammensetzung

**Figur 12:** Absorptionsbanden von Ammoniak in der fetten Synthesegasmischung nach Durchströmen des Plasmareaktors bei laufender Gasentladung

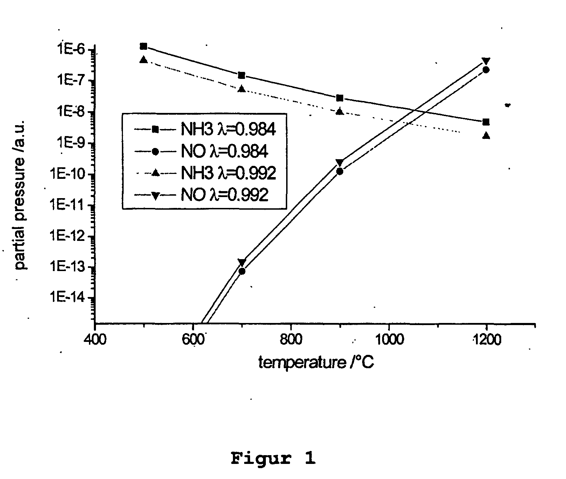

Figur 1 zeigt die Bildung von Ammoniak und Stickstoffmonoxid durch thermische Spaltung von Cetan ($C_8H_{18}$). Die dargestellten Kurven sind das Ergebnis thermodynamischer Berechnungen für zwei verschiedene Luftzahlen ($\lambda$ = 0,984) und ($\lambda$ = 0,992) des angenommenen Gasgemisches. Mit zunehmender Temperatur fällt die Bildung von Ammoniak ab. Gleichzeitig nimmt die Bildung von Stickstoffmonoxid oberhalb von 600°C stark zu.

Für die Bildung von Ammoniak wird erfindungsgemäß eine elektrische Gasentladung eingesetzt. Geeignet sind zum Beispiel Mikrowellenentladungen, auch mit Frequenzen oberhalb 250 MHz, Coronaentladungen und die dielektrisch behinderte Entladung, auch Barrieren-Entladung genannt. Ebenso geeignet sind Mischformen dieser elektrischen Gasentladungen. Bevorzugt werden für das vorgeschlagene Verfahren Barrieren-Entladungen eingesetzt.

Eine Barrieren-Entladung kann zwischen zwei metallischen Elektroden erzeugt werden, von denen wenigsten eine mit einem Dielektrikum belegt ist, das eine Funken- oder Bogenbildung zwischen den beiden metallischen Elektroden verhindert. Stattdessen bildet sich eine Vielzahl von kurzzeitigen und räumlich eng begrenzten Mikroentladungen aus, deren Entladungsdauer, und Energiemenge durch das Dielektrikum begrenzt wird. Geeignete Dielektrika sind Keramiken, Glas, Porzellan oder isolierende Kunststoffe wie zum Beispiel Teflon.

Barrieren-Entladungen können bei Drücken zwischen 0,1 und 10 bar betrieben werden. Die elektrische Anregung der Entladung erfolgt durch Anlegen einer Wechselspannung an die Elektroden. Je nach Druck im Entladungsraum, Abstand der Elektroden, Frequenz und Amplitude der Wechselspannung bilden sich beim Überschreiten einer Zündspannung dünne, räumlich und zeitlich statistisch verteilte Entladungskanäle von nur wenigen Nanosekunden Dauer aus.

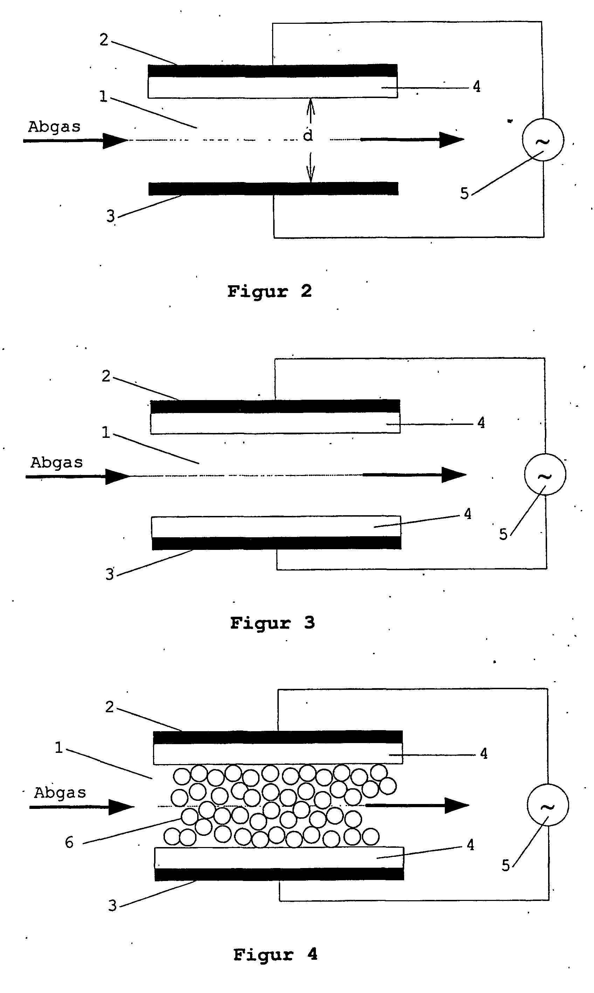

Figur 2 zeigt den prinzipiellen Aufbau eines Plasmareaktors, in dem eine dielektrische Barrieren-Entladung gezündet werden kann. (2) und (3) bezeichnen zwei metallische Elektroden, die sich gegenüberstehen und mit..einer Wechselspannungsquelle (5) verbunden sind. Zur Unterbindung der Ausbildung eines Entladungsbogens zwischen den beiden Elektroden ist Elektrode (2) mit einem Dielektrikum (4) belegt. Eine solche Entladung wird als einseitig dielektrisch behindert bezeichnet.

Durch Anlegen einer Wechselspannung an die beiden Elektroden kommt es bei ausreichender Spannung zu der gewünschten Entladung. Die benötigte Spannung hängt von dem freien Abstand d zwischen Dielektrikum und Gegenelektrode, vom verwendeten Dielektrikum sowie vom Druck in der Entladungsstrekke, von der Gaszusammensetzung und von eventuell vorhandenen Einbauten zwischen den Dielektrika im Entladungsraum ab. Der Abstand d wird bevorzugt zwischen 0,1 und 10 mm eingestellt. Die benötigten Spannungen können 0,2 bis 15 kV betragen. Die Frequenz der Wechselspannung kann zwischen 50 Hz und 250 kHz gewählt werden. Diese Wechselspannungen können auch mit niedriger Frequenz (10 bis 0,01 Hz) getaktet betrieben werden, um beispielsweise die Reaktion von adsorbierten Spezies zu ermöglichen.

Figur 3 zeigt eine Abwandlung der Anordnung von Figur 2. In Figur 3 sind beide Elektroden mit einem Dielektrikum belegt. Die sich im Entladungsraum ausbildende Gasentladung wird deshalb als beidseitig dielektrisch behindert bezeichnet.

Figur 4 zeigt eine besonders vorteilhafte Ausbildung des Plasmareaktors. Der Entladungsraum ist mit Pellets gefüllt. Die Pellets können aus katalytisch aktiven Materialien oder Materialien mit besonderen chemischen Eigenschaften oder Oberflächeneigenschaften bestehen. Auch inerte keramische Kugeln haben einen positiven Einfluß auf die Ausbildung der elektrischen Entladung. Die sich in einem mit Pellets gefüllten Reaktor ausbildende elektrische Entladung findet vor allen Dingen in Form von Gleitentladungen an der Oberfläche der Pellets statt. Dadurch wird die Konzentration an Ionen und Radikalen in räumlicher Nachbarschaft der Oberfläche erhöht. Durch die Verwendung von katalytisch aktiven Pellets kann die Bildung von Ammoniak in der Gasentladung gefördert werden.

Die katalytisch aktiven Pellets bestehen bevorzugt aus mindestens einem feinteiligen Trägermaterial ausgewählt aus der Gruppe Aluminiumoxid, Titanoxid, Zirkonoxid, Ceroxid, Siliciumdioxid, Magnesiumoxid oder deren Mischoxide und Zeolithen. Die Trägermaterialien können in bekannter Weise mit Siliciumdioxid und/oder Seltenerdoxiden gegenüber thermischen Belastungen stabilisiert sein. Außerdem können sie durch Abscheiden mindestens eines der Edelmetalle der Platingruppe, insbesondere Platin, Palladium, Rhodium und Iridium, in hochdisperser Form auf ihre Oberfläche katalytisch aktiviert werden. Zu diesem Zweck sollte die spezifische Oberfläche der Trägermaterialien wenigstens 10 $m^2/g$ (gemessen nach DIN 66132) betragen. Weiterhin ist es vorteilhaft, wenn die keramischen Pellets zusätzlich mindestens ein basisches Oxid der Alkali- oder Erdalkalimetalle des Periodensystems der Elemente enthalten.

Zusätzlich zu den Pellets oder alternativ dazu kann das Dielektrikum auf den Elektrodenoberflächen mit einer katalytisch aktiven Schicht aus feinteiligen Trägermaterialien und katalytisch aktiven Komponenten versehen sein. Ihre Zusammensetzung kann der soeben beschriebenen Zusammensetzung für die keramischen Pellets entsprechen. In bestimmten Anwendungsfällen kann das Dielektrikum auf den Elektrodenoberflächen selbst als katalytisch aktive Schicht aus feinteiligen Trägermaterialien und katalytisch aktiven Komponenten ausgebildet sein. Voraussetzung hierfür ist, daß die Isolationswirkung der Schicht den Anforderungen einer dielektrisch behinderten Entladung genügt.

Die Elektroden des Plasmareaktors können als parallel zueinander ausgerichtete flächige Gebilde aufgebaut sein oder von zwei konzentrisch zueinander angeordneten Rohrelektroden gebildet werden, wobei die elektrische Entladung jeweils im Zwischenraum zwischen den beiden Elektroden abläuft. Im Falle des Reaktors aus zwei parallelen Platten-Elektroden ist wenigstens eine der Elektroden auf den einander gegenüberliegenden Flächen mit einem Dielektrikum beschichtet. Im Falle der konzentrisch angeordneten Rohrelektroden ist wenigstens eine der Elektroden auf den einander gegenüberliegenden Mantelfächen mit einem Dielektrikum beschichtet.

Zur Erleichterung der Ausbildung von Entladungsfäden können räumliche Inhomogenitäten durch Verwendung dreidimenional strukturierter Elektrodenflächen vorgesehen sein, die zu lokalen Feldüberhöhungen und damit zur Ausbildung der Entladung führen. Wie aus der Literatur bekannt ist, ist die eingekoppelte Elektronenenergie bei einer Plasmaentladung abhängig vom Produkt aus Elektrodenabstand d und Druck p (d*p), so daß bei konstantem Gasdruck allein über die Änderung der Geometrie des Reaktors, bestimmte Radikalreaktionen im Plasma gefördert beziehungsweise unterdrückt werden können. Für das vorgeschlagene Verfahren sollte das Produkt aus Elektrodenabstand und Druck im Bereich zwischen 0,05 und 100 mm*bar liegen.

Die Entladung kann über verschiedenartige Wechselspannungen angeregt werden. Für eine hohe Elektronendichte und möglichst gleichzeitige Ausbildung der Entladung im gesamten Entladungsraum des Reaktors sind pulsförmige Anregungsspannungen mit einer Frequenz zwischen 50 Hz und 250 kHz besonders geeignet.

Der Reaktor kann aus jedem elektrisch und thermisch geeigneten Material hergestellt werden. Insbesondere sind Kunststoffe, Keramiken und Gläser zu nennen. Ebenso sind hybride Konstruktionen aus verschiedenen Materialien möglich.

Nach dem Durchlaufen des Plasmareaktors wird der Gasstrom dem mageren Abgas der Verbrennungskraftmaschine zugemischt und über den Katalysator für die selektive katalytische Reduktion geleitet.

Als Katalysator für die selektive katalytische Reaktion können alle aus dem Stand der Technik bekannten SCR-Katalysatoren verwendet werden. Beispielhaft seien hier die in den US-Patenten US 4,916,107, US 5,116,586 und US 5,300,472 beschriebenen Katalysatoren genannt. Die US 4,916,107 und die US 5,300,472 beschreiben Katalysatoren auf der Basis von Titanoxid. Im einzelnen enthalten diese Katalysatoren:

a) Titandioxid;
b) wenigstens ein Oxid von Wolfram, Silicium, Bor, Aluminium, Phosphor, Zirkon, Barium, Yttrium, Lanthan und Cer und
c) wenigstens ein Oxid von Vanadium, Niob, Molybden, Eisen und Kupfer.

Die US 5,116,586 offenbart einen SCR-Katalysator auf der Basis von Zeolithen, der auf einem Zeolith vom Mordenit-Typ Kupfer, Eisen, Molybdän, Cer oder Mischungen davon enthält.

Darüber hinaus sind auch SCR-Katalysatoren bekannt, die als katalytisch aktive Komponente wenigstens ein Platingruppenmetall in hochdisperser Form auf einem geeigneten Trägermaterial enthalten. Als Trägermaterialien können Magnesiumoxid, Aiuminiumoxide, Siliziumoxid, Titanoxid, Zirkonoxid und deren Mischungen eingesetzt werden.

Die genannten Katalysatoren können in Form von Pellets vorliegen oder zu monolithischen Strukturen, insbesondere Wabenkörpern, extrudiert sein. Ebenfalls einsetzbar sind sogenannte Beschichtungskatalysatoren, bei denen der Katalysator in Form einer Schicht auf einem inerten Tragkörper aufgebracht ist.

Das vorgeschlagene Verfahren soll die Stickoxide in sauerstoffreichen, das heißt in mageren Abgasen durch selektive katalytische Reduktion mittels Ammoniak vermindern. Zur Erzeugung des Ammoniaks wird erfindungsgemäß ein fetter, sauerstoffarmer.Gasstrom zum Beispiel in Form eines Abgas-Teilstromes benötigt.

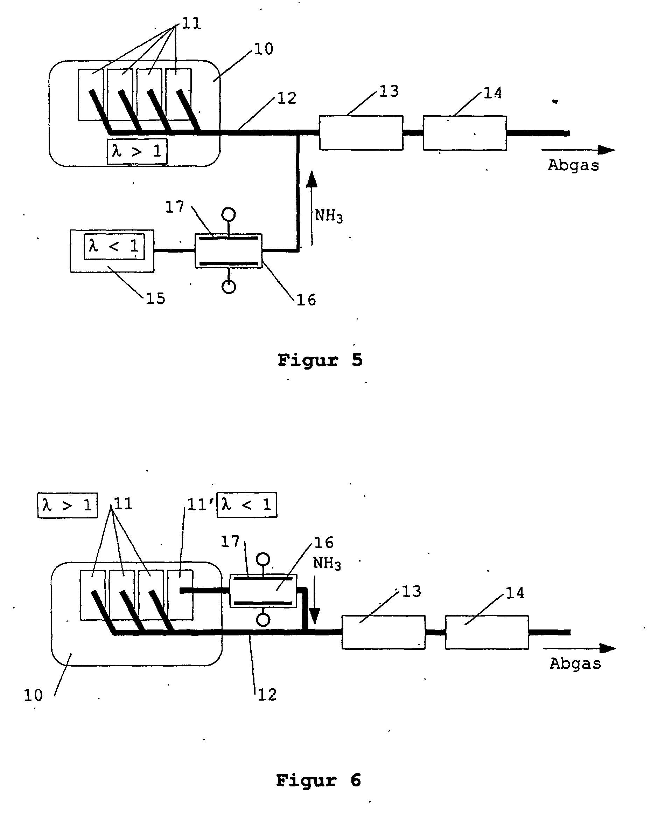

In den Figuren 5 und 6 sind beispielhaft zwei verschiedene Möglichkeiten zur Durchführung des Verfahrens an einem Kraftfahrzeug dargestellt.

Figur 5 zeigt eine Brennkraftmaschine (10) mit 4 Zylindern (11). Die Maschine wird mit einem mageren Luft/Kraftstoff-Gemisch betrieben, das heißt die Luftzahl $\lambda$ ist größer als 1 ($\lambda > 1$). Da durch die Verbrennung in der Maschine die Luftzahl nicht verändert wird, weist auch das Abgas der Maschine eine Luftzahl von über 1 auf.

Das magere Abgas der vier Zylinder wird in der Abgasleitung (12) zusammengefaßt und erst über einen Katalysator für die selektive Reduktion (13) und dann über einen Oxidationskatalysator (14) geleitet. Der Oxidationskatalysator (14) ist optional. Er soll im Falle einer möglichen Überdosierung von Ammoniak diesen oxidieren und somit eine Emission von Ammoniak verhindern.

Zur Erzeugung eines fetten Abgas-Teilstromes ist in Figur 5 ein zusätzlicher Brenner (15) vorgesehen, der mit einem unterstöchiometrischen Luft/Kraftstoff-Gemisch ($\lambda < 1$) betrieben wird. Vorteilhafterweise kann hierfür eine im Fahrzeug vorhandene Standheizung verwendet werden. Eine solche Standheizung ist häufig bei den hier betrachteten kraftstoffsparenden Fahrzeugen notwendig, um die Fahrgastzelle zu beheizen. Das Abgas des Brenners wird zur Bildung von Ammoniak durch die elektrische Gasentladung eines Plasmareaktors (16) hindurchgeführt und dann vor dem Katalysator für die selektive katalytische Reduktion dem Abgas der Brennkraftmaschine beigemischt. Bezugsziffer (17) bezeichnet die Elektroden des Plasmareaktors.

Die Standheizung erfüllt also einerseits den Zweck der Zusatzbeheizung der Fahrgastzelle, andererseits stellt sie eine einfach steuerbare Komponente zur Erzeugung eines fetten Abgas-Teilstromes dar. Zur Verbesserung der Ammoniak-Ausbeute kann zwischen Brenner und elektrischer Gasentladung ein Wärmetauscher eingebaut werden, der das Abgas abkühlt. Somit wird der Heizungswirkungsgrad nur aufgrund der leicht fetten Betriebsweise, nicht aber durch eine Wärmeenergieentnahme, vermindert.

Figur 6 zeigt eine weitere Möglichkeit zur Erzeugung eines fetten Abgas-Teilstromes. (10) bezeichnet hier ebenfalls die Brennkraftmaschine mit vier Zylindern (11) und (11'). In diesem Fall handelt es sich um einen direkteinspritzenden Benzin- oder Dieselmotor mit steuerbarer Einspritzung für jeden Zylinder. Die Zylinder (11) werden mit einem mageren Luft/Kraftstoff-Gemisch ($\lambda > 1$) und Zylinder (11') mit einem fetten Luft/Kraftstoff-Gemisch ($\lambda < 1$) betrieben. In der Abgasleitung dieses Zylinders (11') befindet sich der Plasmareaktor (16) zur Erzeugung von Ammoniak.

Die beiden Verfahrensschritte (Erzeugung eines fetten Gasstromes und die Ammoniakbildung) können auch zusammengefaßt sein. Dies kann zum Beispiel durch Einspritzen von Kraftstoff zusammen mit einer unterstöchiometrischen Menge Luft in den Plasmareaktor geschehen.

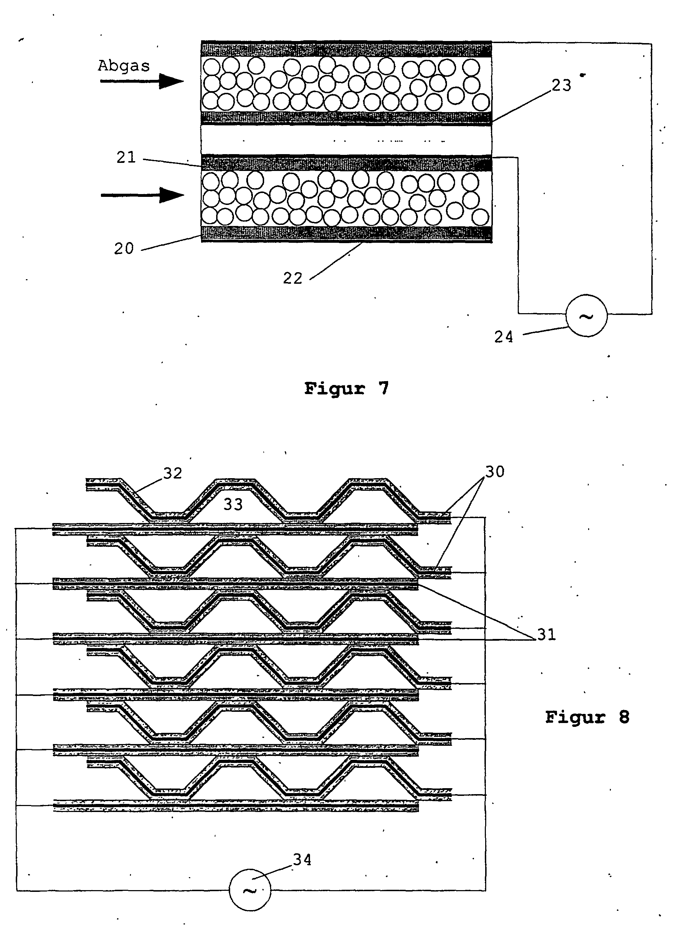

Figur 7 zeigt einen koaxialen Plasmareaktor. (20) bezeichnet ein Außenrohr und (21) ein Innenrohr aus Quarzglas. Die Innenfläche des Innenrohres und die Außenfläche des Außenrohres sind mit metallischen Elektroden (23) und (22) belegt. Durch Anlegen einer Spannungsquelle (24) an diese Elektroden kann im ringförmigen Zwischenraum zwischen Innenrohr und Außenrohr eine dielektrische Barrieren-Entladung gezündet werden.

Figur 8 zeigt den Querschnitt durch einen wabenförmig aufgebauten Reaktor senkrecht zu den Strömungskanälen (33) für das Abgas. Der Wabenkörper besteht abwechselnd aus Lagen von glatten (31) und gewellten (30) Metallfolien, die beidseitig mit einem Dielektrikum (32) beschichtet sind. Die glatten Folien sind über eine gemeinsame elektrische Leitung mit einem Pol der Hochspannungsquelle (34) und die gewellten Folien mit dem zweiten Pol der Spannungsquelle verbunden. Durch Anlegen einer Spannung findet eine elektrische Entladung in jedem Strömungskanal (33) transversal zur Strömung des Abgases statt. Die Beschichtung der Metallfolien mit dem Dielektrikum isoliert die benachbarten Folien elektrisch gegeneinander. Es können entweder die glatten oder gewellten oder beide Folientypen mit einem Dielektrikum zur gegenseitigen elektrischen Isolation beschichtet sein. Anstelle der dielektrischen Beschichtung besteht die Möglichkeit, eine dielektrische Zwischenschicht zwischen benachbarten Folien einzubringen. Bei dieser Zwischenschicht kann es sich zum Beispiel um eine keramische Folie handeln.

Wegen der geringen Querschnittsabmessungen der Strömungskanäle kann die Entladungsspannung entsprechend niedrig gewählt werden. Die Länge der Wabenkörper ist nicht beschränkt. In Figur 8 sind gewellte und glatte Metallfolien miteinander kombiniert und bilden einen Folienstapel. Es können jedoch auch zwei verschiedenartig gewellte Metallfolien miteinander kombiniert werden. Die Art der Wellung, ebenso wie die Querschnittsabmessungen der Strömungskanäle können den Anwendungserfordernissen angepaßt werden.

Auch bei diesem Reaktor kann auf die dielektrischen Schichten, welche die Metallfolien gegen die Gasentladung und untereinander isolieren, eine Katalysatorschicht aus feinteiligen Trägermaterialien und katalytisch aktiven Komponenten aufgebracht werden. Alternativ hierzu können die dielektrischen Schichten selbst als katalytisch aktive Schicht aus feinteiligen Trägermaterialien und katalytisch aktiven Komponenten ausgebildet sein, wenn diese Schicht eine den Anforderungen der dielektrisch behinderten Entladung genügende Isolationswirkung aufbringt. Die Zusammensetzung dieser katalytisch aktiven Schicht kann der schon für die keramischen Pellets beschriebenen Zusammensetzung entsprechen.

Das vorgeschlagene Verfahren besitzt gegenüber den bekannten Verfahren verschiedene Vorteile. Es ist zum Beispiel auf verschiedene Motorkonzepte anwendbar. Beim Einsatz an Magermotoren verschlechtern sich die Verbrauchswerte für den Kraftstoff nur geringfügig. Besonders vorteilhaft ist die Erzeugung von Ammoniak an Bord des Kraftfahrzeugs, ohne die Notwendigkeit zusätzliche Betriebsstoffe mitführen zu müssen. Die notwendige Menge an Ammoniak kann über die elektrischen und geometrischen Parameter der Gasentladung sowie über die Bereitstellung des fetten Abgas-Teilstromes eingestellt werden. Die Steuerung dieses Vorganges kann dabei von der Motorelektronik vorgenommen werden.

**Beispiel:**

Für die folgenden Untersuchungen zur Bildung von Ammoniak durch Behandeln eines fetten Gasstromes in einer Plasmaentladung wurde der koaxiale Reaktor von Figur 7 eingesetzt. Außen- und Innenrohr bestanden aus 2 mm dickem Quarzglas. Das Außenrohr hatte einen Außendurchmesser von 4 und das Innenrohr einen Innendurchmesser von 2,6 cm. Die Länge des Reaktors betrug 20 und die Länge der Elektroden 16 cm. Der Gasentladungsraum zwischen den beiden Quarzrohren war mit einem Palladium-Pelletkatalysator (3,2 g Palladium und 35 g Bariumoxid auf einem Liter Pellets aus $\gamma$-Aluminiumoxid) gefüllt.

Durch den Reaktor wurde die in der Tabelle 1 angegebene Synthesegasmischung mit einem Volumenstrom von 4,5 Nl/min bei Atmosphärendruck und einer Temperatur von 100°C geführt. Das Produkt d*p betrug 6 mm*bar. Durch Anlegen einer Wechselspannung mit einer Frequenz von 1 kHz und einer Amplitude von etwa 11 kV wurde im Reaktor eine Barrieren-Entladung gezündet.

Die Messungen wurden bei Raumtemperatur durchgeführt.

Tabelle 1:

| Zusammensetzung der Synthesegasmischung | |
|---|---|
| Stoff | Konzentration [Vol.-%] bei T = 293 K |
| $N_2$ | 77 |

Tabelle 1:   (fortgesetzt)

| Zusammensetzung der Synthesegasmischung | |
|---|---|
| Stoff | Konzentration [Vol.-%] bei T = 293 K |
| $O_2$ | 13 |
| $H_2O$ | 10 |
| NO | 500 ppm |
| Summe | 100 |

Die Synthesegasmischung von Tabelle 1 ist mager, das heißt sie weist einen überstöchiometrischen Sauerstoffgehalt auf (Die Luftzahl $\lambda$ ist größer als 1.). Unter diesen Bedingungen wird beim Einschalten der Gasentladung Stickstoffmonoxid vom Pellet-Katalysator adsorbiert. Dies kann durch die Umsetzung von NO zu $NO_2$ im Plasmareaktor bei Luftüberschuß und nachfolgender weiterer Oxidation und Speicherung als $NO_3^-$ erklärt werden. Wird von der mageren Abgaszusammensetzung auf eine fette Zusammensetzung umgeschaltet, so findet eine Desorption des zuvor adsorbierten Stickstoffmonoxids statt. Gleichzeitig bildet sich in der Gasentladung Ammoniak, welches das desorbierte Stickoxid sehr effektiv zu Stickstoff und Wasser umsetzt. Im vorliegenden Beispiel wurde die Umschaltung von magerem auf fettes Abgas durch Abschalten der Sauerstoffzufuhr und Zuschalten von Kohlenmonoxid vorgenommen.

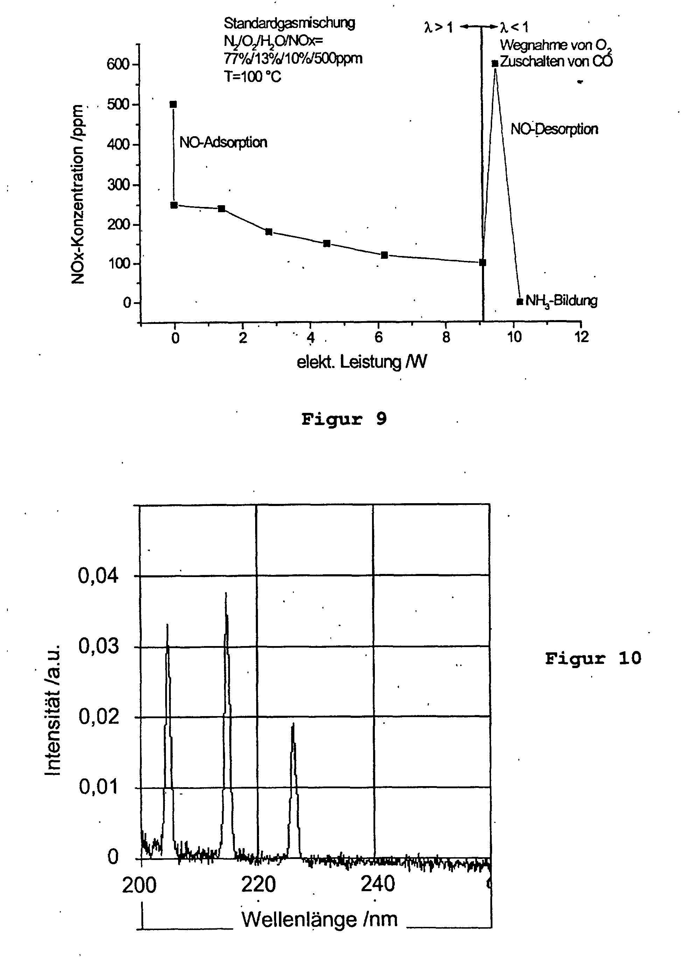

Figur 9 bis 12 belegen die oben beschriebenen Vorgänge. Figur 9 zeigt den Verlauf der Konzentration von Stickstoffmonoxid im Synthesegas hinter dem Plasmareaktor in Abhängigkeit von der in die Gasentladung eingekoppelten elektrischen Leistung. Bei ausgeschalteter Gasentladung (elektrische Leistung 0) wird hinter dem Plasmareaktor die NO-Konzentration der Synthesegasmischung von 500 ppm gemäß Tabelle 1 gemessen. Nach Einschalten der Gasentladung findet sofort eine starke Verminderung der NO-Konzentration statt. Dies ist auf die Bildung von Stickstoffdioxid durch die Plasmaentladung zurückzuführen, welches sehr effektiv von den Katalysatorpellets adsorbiert wird.

Die elektrische Leistung der Plasmaentladung wurde langsam erhöht. Bei einer Leistung von etwa 9 Watt wurde die Zusammensetzung der Synthesegasmischung von mager auf fett durch Abschalten von Sauerstoff und Zuführen von Kohlenmonoxid geändert. Figur 9 zeigt nach dem Umschalten der Abgaszusammensetzung zunächst eine starke Desorption von Stickstoffmonoxid unter den jetzt vorliegenden reduzierenden Abgasbedingungen. Gleichzeitig wird durch die Plasmaentladung Ammoniak unter Verbrauch von Stickstoffmonoxid und gegebenenfalls weiterer stickstoffhaltiger Verbindungen des Gasstromes (z.B. $N_2$) gebildet.

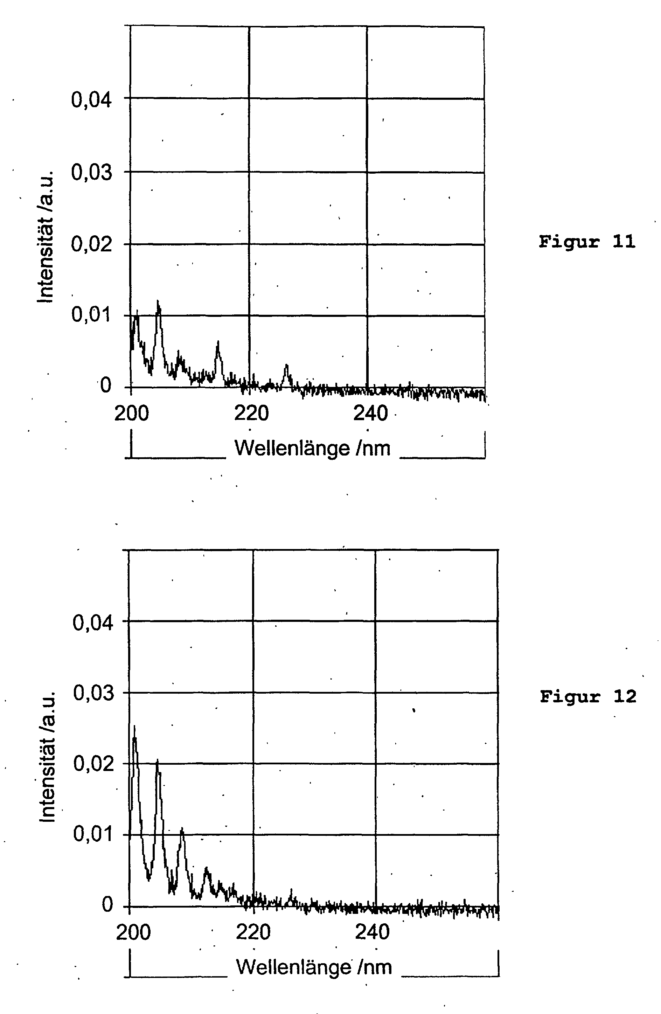

Figuren 10 bis 12 zeigen spektroskopische Untersuchungen des Abgases während der mageren Betriebsphase, während des Umschaltens von mager auf fette Betriebsweise und während der fetten Betriebsphase. Während der mageren Phase zeigt das Abgas nur die Absorptionsbanden von Stickstoffmonoxid. Während der Umschaltphase verschwinden diese Absorptionsbanden (Figur 11) und während der fetten Betriebsphase zeigt das Abgas deutlich die Absorptionsbanden des gebildeten Ammoniaks (Figur 12).

Dieser Versuch wurde mit den folgenden Zusammensetzungen der Pellets im Plasmareaktor wiederholt:

$$Pt/BaO/\gamma\text{-}Al_2O_3$$

$$Pt\text{-}Pd/BaO/\gamma\text{-}Al_2O_3,$$

$$Pt/\gamma\text{-}Al_2O_3$$

$$V_2O_5/\gamma\text{-}Al_2O_3$$

$$\alpha\text{-}Al_2O_3$$

In allen Fällen zeigte sich eine deutliche Bildung von Ammoniak in der Gasentladung unter reduzierenden Abgasbedingungen.

**Patentansprüche**

**1.** Verfahren zur selektiven katalytischen Reduktion der in einem mageren Abgas einer Verbrennungskraftmaschine mit einem oder mehreren Zylindern enthaltenen Stickoxide durch Reduktion der Stickoxide mittels Ammoniak an einem Reduktions-Katalysator, **gekennzeichnet durch** die Verfahrensschritte:

a) Erzeugung eines fetten Gasstromes mit einer Luftzahl kleiner als 1,
b) Bilden von Ammoniak im fetten Gasstrom **durch** Behandeln des Gasstromes in einem elektrischen Gasentladungsplasma,
c) Zusammenführen des mageren Abgases mit dem fetten Gasstrom und
d) Reduktion der im mageren Abgas enthaltenen Stickoxide am Reduktions-Katalysator unter Verwendung des gebildeten Ammoniaks als Reduktionsmittel.

**2.** Verfahren nach Anspruch 1,
**dadurch gekennzeichnet,**
**daß** der fette Gasstrom durch einen unterstöchiometrisch betriebenen Brenner erzeugt wird.

**3.** Verfahren nach Anspruch 1,
**dadurch gekennzeichnet,**
**daß** der fette Gasstrom einen Teil des Abgasstromes der Verbrennungskraftmaschine bildet und durch Betreiben eines Zylinders der Maschine mit einem unterstöchiometrischen Luft/Kraftstoff-Gemisch gewonnen wird.

**4.** Verfahren nach Anspruch 1,
**dadurch gekennzeichnet,**
**daß** als Gasentladung eine dielektrisch behinderte Entladung bei Atmosphärendruck mit einem Produkt (d*p) aus Elektrodenabstand und Druck zwischen 0,05 und 100 mm*bar eingesetzt wird.

**5.** Verfahren nach Anspruch 4,
**dadurch gekennzeichnet,**
**daß** die Entladung in den Strömungskanälen eines Wabenkörpers angeregt wird, welcher durch Übereinanderstapeln von abwechselnd glatten und gewellten Metallfolien erhalten wurde, wobei entweder die glatten oder gewellten oder beide Folientypen mit einem Dielektrikum zur gegenseitigen elektrischen Isolation beschichtet sind und die Entladungsspannung zwischen allen glatten und allen gewellten Folien angelegt wird.

**6.** Verfahren nach Anspruch 5,
**dadurch gekennzeichnet,**
**daß** auf die Beschichtung der Metallfolien mit dem Dielektrikum eine Katalysatorschicht aus feinteiligen Trägermaterialien und katalytisch aktiven Komponenten aufgebracht ist.

**7.** Verfahren nach Anspruch 5,
**dadurch gekennzeichnet,**
**daß** das Dielektrikum durch eine Katalysatorbeschichtung aus feinteiligen Trägermaterialien und katalytisch aktiven Komponenten gebildet wird.

**8.** Verfahren nach Anspruch 6 oder 7,
**dadurch gekennzeichnet,**
**daß** als feinteilige Trägermaterialien Aluminiumoxid, Titanoxid, Zirkonoxid, Ceroxid, Siliciumdioxid, Magnesiumoxid oder deren Mischoxide und Zeolithe verwendet werden.

**9.** Verfahren nach Anspruch 8,
**dadurch gekennzeichnet,**
**daß** die feinteiligen Trägermaterialien mit Siliciumdioxid und/oder Seltenerdoxiden stabilisiert sind.

**10.** Verfahren nach Anspruch 8,
**dadurch gekennzeichnet,**
**daß** die Katalysatorbeschichtung mindestens eine der katalytisch aktiven Komponenten Platin, Palladium, Rhodium und Iridium in hochdisperser Form enthält.

**11.** Verfahren nach Anspruch 8,
**dadurch gekennzeichnet,**
**daß** die Katalysatorbeschichtung zusätzlich mindestens ein basisches Oxid der Alkali- oder Erdalkalimetalle des Periodensystems der Elemente enthält.

**12.** Verfahren nach Anspruch 4,
**dadurch gekennzeichnet,**
**daß** die Entladung zwischen zwei parallelen Elektroden erzeugt wird, von denen wenigstens eine auf den einander gegenüberliegenden Flächen mit einem Dielektrikum beschichtet ist.

**13.** Verfahren nach Anspruch 4,
**dadurch gekennzeichnet,**
**daß** die Entladung im Ringraum zwischen zwei konzentrisch zueinander angeordneten Rohrelektroden erzeugt wird, von denen wenigstens eine auf den einander gegenüberliegenden Mantelflächen der rohrförmigen Elektroden mit einem Dielektrikum beschichtet ist.

**14.** Verfahren nach Anspruch 12 oder 13,
**dadurch gekennzeichnet,**
**daß** der Entladungsraum zwischen den Elektroden mit keramischen Pellets gefüllt ist.

**15.** Verfahren nach Anspruch 14,
**dadurch gekennzeichnet,**
**daß** die keramischen Pellets aus mindestens einem feinteiligen Trägermaterial ausgewählt aus der Gruppe Aluminiumoxid, Titanoxid, Zirkonoxid, Ceroxid, Siliciumdioxid, Magnesiumoxid oder deren Mischoxide und Zeolithen bestehen.

**16.** Verfahren nach Anspruch 15,
**dadurch gekennzeichnet,**
**daß** die feinteiligen Trägermaterialien mit Siliciumdioxid und/oder Seltenerdoxiden stabilisiert sind.

**17.** Verfahren nach Anspruch 15,
**dadurch gekennzeichnet,**
**daß** die keramischen Pellets mindestens eine der katalytisch aktiven Komponenten Platin, Palladium, Rhodium und Iridium in hochdisperser Form enthalten.

**18.** Verfahren nach Anspruch 15,
**dadurch gekennzeichnet,**
**daß** die keramischen Pellets zusätzlich mindestens ein basisches Oxid der Alkali- oder Erdalkalimetalle des Periodensystems der Elemente enthalten.

**19.** Verfahren nach Anspruch 12 oder 13,
**dadurch gekennzeichnet,**
**daß** auf das Dielektrikum eine Katalysatorschicht aus feinteiligen Trägermaterialien und katalytisch aktiven Komponenten aufgebracht ist.

20. Verfahren nach Anspruch 12 oder 13,
**dadurch gekennzeichnet,**
**daß** das Dielektrikum durch eine Katalysatorbeschichtung aus feinteiligen Trägermaterialien und katalytisch aktiven Komponenten gebildet wird.

21. Verfahren nach einem der Ansprüche 5 bis 7 und 12 oder 13,
**dadurch gekennzeichnet,**
**daß** die Entladung mit einer gepulsten Spannung mit einer Frequenz zwischen 50 Hz und 250 kHz angeregt wird.

22. Verfahren nach einem der Ansprüche 5 bis 7 und 12 oder 13,
**dadurch gekennzeichnet,**
**daß** die Entladung mit einer Wechselspannung zwischen 0,2 und 15 kV und einer Frequenz zwischen 50 Hz und 250 kHz angeregt wird.

23. Verfahren nach Anspruch 22,
**dadurch gekennzeichnet,**
**daß** die Wechselspannung mit einer Frequenz zwischen 0,01 und 10 Hz getaktet betrieben wird.

24. Verfahren nach einem der Ansprüche 5 bis 7 und 12 oder 13,
**dadurch gekennzeichnet,**
**daß** die Elektrodenflächen dreidimensional strukturiert sind.

25. Verfahren nach Anspruch 1,
**dadurch gekennzeichnet,**
**daß** für die selektive katalytische Reduktion ein Reduktions-Katalysator verwendet wird, der die folgenden Komponenten enthält:

a) Titandioxid;
b) wenigstens ein Oxid von Wolfram, Silicium, Bor, Aluminium, Phosphor, Zirkon, Barium, Yttrium, Lanthan und Cer und
c) wenigstens ein Oxid von Vanadium, Niob, Molybdän, Eisen und Kupfer.

26. Verfahren nach Anspruch 1,
**dadurch gekennzeichnet,**
**daß** für die selektive katalytische Reduktion ein Zeolith-Katalysator verwendet wird, der auf einem Zeolith vom Mordenit-Typ Kupfer, Eisen, Cer oder Mischungen davon enthält.

## Claims

1. Process for the selective catalytic reduction of the nitrogen oxides contained in a lean exhaust gas from an internal combustion engine with one or more cylinders, by reducing the nitrogen oxides by means of ammonia on a reduction catalyst, **characterised by** the following process steps:

a) production of a rich gas stream with an excess-air coefficient of less than 1,
b) formation of ammonia in the rich gas stream by treating the gas stream in an electrical gas discharge plasma,
c) combination of the lean exhaust gas with the rich gas stream, and
d) reduction of the nitrogen oxides contained in the lean exhaust gas on the reduction catalyst using the ammonia formed as reducing agent.

2. Process according to claim 1,
**characterised in that**
the rich gas stream is produced by a substoichiometrically operating burner.

3. Process according to claim 1,
**characterised in that**
the rich gas stream forms part of the exhaust gas stream from the internal combustion engine and is obtained by operating one cylinder of the engine with a sub-stoichiometric air/fuel mixture.

4. Process according to claim 1,
**characterised in that**
a dielectrically hindered discharge at atmospheric pressure with a product (d x p) of the electrode interspacing and pressure of between 0.05 and 100 mm x bar is used as the gas discharge.

5. Process according to claim 4,
**characterised in that**
the discharge is excited in the flow channels of a honeycomb body that has been obtained by stacking alternately smooth and corrugated metal sheets on top of one another, wherein either the smooth or corrugated sheets or both types of sheets are coated with a dielectric to achieve electrical insulation from one another and the discharge voltage is applied between all smooth and all corrugated sheets.

6. Process according to claim 5,
**characterised in that**
a catalyst layer of finely divided support materials and catalytically active components is applied to the coating of the metal sheets with the dielectric.

7. Process according to claim 5,
**characterised in that** the dielectric is formed by a catalyst coating of finely divided support materials and catalytically active components.

8. Process according to claim 6 or 7,

**characterised in that**
aluminium oxide, titanium oxide, zirconium oxide, cerium oxide, silicon dioxide, magnesium oxide or their mixed oxides and zeolites are used as finely divided support materials.

9. Process according to claim 8,
**characterised in that**
the finely divided support materials are stabilised with silicon dioxide and/or rare earth oxides.

10. Process according to claim 8,
**characterised in that**
the catalyst coating contains at least one of the catalytically active components platinum, palladium, rhodium and iridium in highly dispersed form.

11. Process according to claim 8,
**characterised in that**
the catalyst coating additionally contains at least one basic oxide of the alkali or alkaline earth metals of the periodic system of the elements.

12. Process according to claim 4,
**characterised in that**
the discharge is generated between two parallel electrodes, at least one of which is coated on the mutually opposite faces with a dielectric.

13. Process according to claim 4,
**characterised in that**
the discharge is generated in the annular space between two tubular electrodes arranged concentrically with respect to one another, at least one of which is coated with a dielectric on the mutually opposite jacket surfaces of the tubular electrodes.

14. Process according to claim 12 or 13,
**characterised in that**
the discharge space between the electrodes is filled with ceramic pellets.

15. Process according to claim 14,
**characterised in that**
the ceramic pellets comprise at least one finely divided support material selected from the group comprising aluminium oxide, titanium oxide, zirconium oxide, cerium oxide, silicon dioxide, magnesium oxide or their mixed oxides and zeolites.

16. Process according to claim 15,
**characterised in that**
the finely divided support materials are stabilised with silicon dioxide and/or rare earth oxides.

17. Process according to claim 15,
**characterised in that**
the ceramic pellets contain at least one of the catalytically active components platinum, palladium, rhodium and iridium in a highly dispersed form.

18. Process according to claim 15,
**characterised in that**
the ceramic pellets additionally contain at least one basic oxide of the alkali or alkaline earth metals of the periodic system of the elements.

19. Process according to claim 12 or 13,
**characterised in that**
a catalyst layer of finely particulate support materials and catalytically active components is applied to the dielectric.

20. Process according to claim 12 or 13,
**characterised in that**
the dielectric is formed by a catalyst coating of finely particulate support materials and catalytically active components.

21. Process according to one of claims 5 to 7 and 12 or 13,
**characterised in that**
the discharge is excited with a pulsed voltage having a frequency between 50 Hz and 250 kHz.

22. Process according to one of claims 5 to 7 and 12 or 13,
**characterised in that**
the discharge is excited with an alternating voltage between 0.2 and 15 kV and a frequency between 50 Hz and 250 kHz.

23. Process according to claim 22,
**characterised in that**
the alternating voltage is applied at a frequency between 0.01 and 10 Hz.

24. Process according to one of claims 5 to 7 and 12 or 13,
**characterised in that**
the electrode surfaces are three-dimensionally structured.

25. Process according to claim 1,
**characterised in that**
for the selective catalytic reduction a reduction catalyst is used that contains the following components:

a) titanium dioxide;
b) at least one oxide of tungsten, silicon, boron, aluminium, phosphorus, zirconium, barium, yttrium, lanthanum and cerium, and
c) at least one oxide of vanadium, niobium, molybdenum, iron and copper.

**26.** Process according to claim 1,
**characterised in that**
for the selective catalytic reduction a zeolite catalyst is used that contains copper, iron, cerium or mixtures thereof on a mordenite type zeolite.

**Revendications**

**1.** Procédé pour la réduction catalytique sélective des oxydes d'azote contenus dans les gaz d'échappement pauvres d'un moteur à combustion avec un ou plusieurs cylindres par réduction des oxydes d'azote au moyen d'ammoniac sur un catalyseur de réduction,
**caractérisé par** les étapes suivantes :

a) production d'un courant de gaz riche d'un indice d'air inférieur à 1,
b) formation d'ammoniac dans le courant de gaz riche par traitement du courant des gaz dans un plasma de décharge électrique des gaz,
c) regroupement des gaz d'échappement pauvres et des gaz d'échappement riches et
d) réduction des oxydes d'azote contenus dans les gaz d'échappement pauvres sur le catalyseur de réduction avec utilisation de l'ammoniac formé en tant qu'agent de réduction.

**2.** Procédé selon la revendication 1,
**caractérisée en ce que**
le courant de gaz riche est produit par un brûleur à fonctionnement sous-stoechiométrique.

**3.** Procédé selon la revendication 1,
**caractérisé en ce que**
le courant de gaz riche forme une partie du courant de gaz d'échappement du moteur à combustion et est obtenu grâce au fonctionnement d'un cylindre du moteur avec un mélange air/carburant sous-stoechiométrique.

**4.** Procédé selon la revendication 1,
**caractérisé en ce que**
comme décharge des gaz, on utilise une décharge gênée diélectriquement, à la pression atmosphérique avec un produit (d*p) de la distance entre les électrodes par la pression compris entre 0,05 et 100 mm*bar.

**5.** Procédé selon la revendication 4,
**caractérisé en ce que**
la décharge est excitée dans les canaux d'écoulement d'un corps alvéolaire qui a été obtenu par la superposition de films métalliques alternativement lisses et ondulés, les types de films soit lisses, soit ondulés, soit les deux étant revêtus d'un diélectrique en vue de l'isolation électrique réciproque et la tension de décharge étant appliquée entre tous les films lisses et tous les films ondulés.

**6.** Procédé selon la revendication 5,
**caractérisé en ce que**
sur le revêtement des films métalliques par un diélectrique, une couche de catalyseur constituée de matières supports finement texturées et de composants catalytiquement actifs est appliquée.

**7.** Procédé selon la revendication 5,
**caractérisé en ce que**
le diélectrique est formé d'un revêtement catalyseur constitué de matières supports finement texturées et de composants catalytiquement actifs.

**8.** Procédé selon la revendication 6 ou 7,
**caractérisé en ce que**
comme matières supports finement texturées, on utilise de l'oxyde d'aluminium, de l'oxyde de titane, de l'oxyde de zirconium, de l'oxyde de cérium, du dioxyde de silicium, de l'oxyde de magnésium ou leurs oxydes mixtes et zéolithes.

**9.** Procédé selon la revendication 8,
**caractérisé en ce que**
les matières supports finement texturées sont stabilisées avec du dioxyde de silicium et/ou des oxydes de terres rares.

**10.** Procédé selon la revendication 8,
**caractérisé en ce que**
le revêtement catalyseur contient au moins l'un des composants catalytiquement actifs platine, palladium, rhodium et iridium sous forme hautement dispersée.

**11.** Procédé selon la revendication 8,
**caractérisé en ce que**
le revêtement catalyseur contient en complément au moins un oxyde basique des métaux alcalins ou alcalino-terreux de la Classification périodique des éléments.

**12.** Procédé selon la revendication 4,
**caractérisé en ce que**
la décharge est produite entre deux électrodes parallèles dont au moins une est revêtue d'un diélectrique sur l'une des faces opposées.

**13.** Procédé selon la revendication 4,
**caractérisé en ce que**
la décharge est produite dans l'espace annulaire entre deux électrodes tubulaires disposées de façon concentrique l'une par rapport à l'autre, dont au moins une des faces de la gaine superposées des électrodes tubulaires est revêtue d'un diélectrique.

**14.** Procédé selon la revendication 12 ou 13,
**caractérisé en ce que**
l'espace de décharge entre les électrodes est rempli de pastilles céramiques.

**15.** Procédé selon la revendication 14,
**caractérisé en ce que**
les pastilles céramiques constituées d'au moins une matière support finement texturée sont choisies dans le groupe oxyde d'aluminium, oxyde de titane, oxyde de zirconium, oxyde de cérium, dioxyde de silicium, oxyde de magnésium ou leurs oxydes mixtes et zéolithes.

**16.** Procédé selon la revendication 15,
**caractérisé en ce que**
les matières supports finement texturées sont stabilisées avec du dioxyde de silicium et/ou des oxydes de terres rares.

**17.** Procédé selon la revendication 15,
**caractérisé en ce que**
les pastilles céramiques contiennent au moins un des composants catalytiquement actifs platine, palladium, rhodium et iridium sous forme hautement dispersée.

**18.** Procédé selon la revendication 15,
**caractérisé en ce que**
les pastilles céramiques contiennent en complément au moins un oxyde basique des métaux alcalin ou alcalino-terreux de la Classification périodique des éléments.

**19.** Procédé selon la revendication 12 ou 13,
**caractérisé en ce que**
sur le diélectrique, est appliquée une couche de catalyseur constituée de matières supports finement texturées et de composants catalytiquement actifs.

**20.** Procédé selon la revendication 12 ou 13,
**caractérisé en ce que**
le diélectrique est formé d'un revêtement catalyseur constitué de matières supports finement texturées et de composants catalytiquement actifs.

**21.** °) Procédé selon l'une quelconque des revendications 5 à 7 et 12 ou 13,
**caractérisé en ce que**
la décharge est excitée à une tension pulsée d'une fréquence comprise entre 50 Hz et 250 kHz.

**22.** Procédé selon l'une quelconque des revendications 5 à 7 et 12 ou 13,
**caractérisé en ce que**
la décharge est excitée à une tension alternative comprise entre 0,2 et 15 kV et à une fréquence comprise entre 50 Hz et 250 kHz.

**23.** Procédé selon la revendication 22,
**caractérisé en ce que**
la tension alternative est cadencée à une fréquence comprise entre 0,01 et 10 Hz.

**24.** Procédé selon l'une quelconque des revendications 5 à 7 et 12 ou 13,
**caractérisé en ce que**
la surface des électrodes a une structure tridimensionnelle.

**25.** Procédé selon la revendication 1,
**caractérisé en ce que**
pour la réduction catalytique sélective, on utilise un catalyseur de réduction qui renferme les composants suivants :

a) du dioxyde de titane ;
b) au moins un oxyde de manganèse, silicium, bore, aluminium, phosphore, zirconium, baryum, yttrium, lanthane et cérium et
c) au moins un oxyde de vanadium, niobium, molybdène, fer et cuivre.

**26.** Procédé selon la revendication 1,
**caractérisé en ce que**
pour la réduction catalytique sélective, on utilise un catalyseur zéolithique qui, sur une zéolithe de type mordénite, contient du cuivre, du fer, du cérium ou des mélanges de ces derniers.

Figur 1

**Figur 2**

**Figur 3**

**Figur 4**

**Figur 5**

**Figur 6**

**Figur 7**

**Figur 8**

**Figur 9**

**Figur 10**

Figur 11

Figur 12